# EUROPÄISCHE PATENTANMELDUNG

(11) **EP 1 338 450 A2**
(43) Veröffentlichungstag der Anmeldung: **27.08.2003**
(21) Anmeldenummer: 02025976.8
(22) Anmeldetag: 21.11.2002
(51) Int. Cl.: B60H 1/22

(54) **Heizgerät, insbesondere für ein Fahrzeug**

(30) Priorität: 25.02.2002 DE 10207953
(71) Anmelder: J. Eberspächer GmbH Co. KG, 73730 Esslingen (DE)
(72) Erfinder: Schmidt, Oliver, 73207 Plochingen (DE)

(57) **Zusammenfassung**

Ein Heizgerät, insbesondere für ein Fahrzeug, umfasst eine Brennkammeranordnung (16) mit einer Brennkammerbodenwandung (22) und einer Brennkammeraußenwandung (18), eine Strömungsführungsanordnung (70) zum Führen von Verbrennungsabgasen aus der Brennkammeranordnung (16) heraus, von dieser weg und nach einer Strömungsrichtungsänderung in Richtung zur Brennkammeranordnung (16) zurück, wobei die Strömungsführungsanordnung (70) das Umströmen wenigstens eines Teils der Außenseite (62) der Brennkammeraußenwandung (18) und wenigstens eines Teils der Außenseite (64) der Brennkammerbodenwandung (72) durch in dieser geführte Verbrennungsabgase ermöglicht.

## Beschreibung

Die vorliegende Erfindung betrifft ein Heizgerät, wie es vor allem Einsatz finden kann als Standheizung oder Zuheizer in einem Fahrzeug.

Derartige Heizgeräte werden im Allgemeinen mit dem gleichen Brennstoff betrieben, wie das Antriebsaggregat eines Fahrzeugs. D.h., es muss der im Allgemeinen flüssig vorliegende Brennstoff zunächst zusammen mit der ebenfalls zugeführten Verbrennungsluft in ein zündfähiges Gemisch aus Verbrennungsluft und Brennstoff umgewandelt werden. Ein Typ von Heizgeräten bedient sich hierzu eines porösen Verdampfermediums, in welches der flüssige Brennstoff eingespeist wird und aus welchem der Brennstoff dann in dampfförmiger Form in Richtung zu einer Brennkammer hin abgegeben wird. Die Qualität der Verbrennung und somit auch die Menge der aus dem Heizgerät abgegebenen schädlichen Abgase hängen im Wesentlichen von der Abdampfcharakteristik ab. Eine ungleichmäßige Temperaturverteilung in der Brennkammer bzw. in dem porösen Verdampfermedium hat eine entsprechend ungleichmäßige Verbrennung zur Folge. Auch haben zu niedere Abdampftemperaturen eine negative Auswirkung auf das Verbrennungsverhalten eines derartigen Heizgerätes.

Es ist die Aufgabe der vorliegenden Erfindung, ein Heizgerät, welches insbesondere für ein Fahrzeug einsetzbar ist, derart auszugestalten, dass bei einfachem Aufbau ein zur Schadstoffminimierung beitragendes Verbrennungsverhalten erzielt werden kann.

Erfindungsgemäß wird diese Aufgabe gelöst durch ein Heizgerät, insbesondere für ein Fahrzeug, umfassend eine Brennkammeranordnung mit einer Brennkammerbodenwandung und einer Brennkammeraußenwandung, eine Strömungsführungsanordnung zum Führen von Verbrennungsabgasen aus der Brennkammeranordnung heraus, von dieser weg und nach einer Strömungsrichtungsänderung in Richtung zur Brennkammeranordnung zurück, wobei die Strömungsführungsanordnung das Umströmen wenigstens eines Teils der Außenseite der Brennkammeraußenwandung und wenigstens eines Teils der Außenseite der Brennkammerbodenwandung durch in dieser geführte Verbrennungsabgase ermöglicht.

Bei dem erfindungsgemäß ausgestalteten Heizgerät ist wesentlich, dass ein Großteil der durch eine Außenwandung und eine Bodenwandung begrenzten Brennkammer durch die in der Brennkammer bzw. die darin ablaufende Verbrennung erzeugten Abgase umströmt werden kann. Diese Abgase weisen eine vergleichsweise hohe Temperatur auf und führen somit zu einer sehr gleichmäßigen Erwärmung bzw. Vorwärmung der die Brennkammer nach außen hin begrenzenden Wandungsbereiche. Infolgedessen wird die in der Brennkammer stattfindende Verbrennung bei sehr gleichmäßigen Bedingungen ablaufen können, da in der Brennkammer eine sehr gleichmäßige Temperaturverteilung erzeugt wird.

Beispielsweise kann vorgesehen sein, dass die Brennkammerbodenwandung im Wesentlichen ringartig ausgebildet ist.

Eine das Umströmen der Brennkammeranordnung bzw. der diese umgebenden Wandungen sehr gut ermöglichende Ausgestaltungsform kann vorsehen, dass die Strömungsführungsanordnung in ihrem der Brennkammeranordnung nahen Bereich die Außenseite der Brennkammeraußenwandung, die Außenseite der Brennkammerbodenwandung sowie ein die Brennkammeranordnung nach innen begrenzendes Verbrennungsluftzuführelement umfasst. Konstruktiv kann eine derartige Anordnung sehr leicht dadurch geschaffen werden, dass die Brennkammeranordnung ein im Wesentlichen topfartiges Gehäuse umfasst, dessen Außenwandung im Wesentlichen die Brennkammeraußenwandung bildet und dessen Bodenwandung im Wesentlichen die Brennkammerbodenwandung bildet, wobei die Bodenwandung des Gehäuses eine Öffnung aufweist, durch welche das Verbrennungsluftzuführelement teilweise hindurchgeführt ist, wobei das Verbrennungsluftzuführelement mit einem außerhalb einer Brennkammer liegenden Bereich einen Teil der Strömungsführungsanordnung bildet.

Wie bereits ausgeführt, ist die erfindungsgemäße Ausgestaltung, bei welcher eine sehr großflächige und gleichmäßige Umströmung der Brennkammeranordnung mit Verbrennungsabgasen ermöglicht ist, insbesondere dann vorteilhaft, wenn ein poröses Verdampfermedium wenigstens teilweise an der Brennkammeraußenwandung oder/und der Brennkammerbodenwandung vorgesehen ist. Die zur Erzeugung eines zündfähigen Gemisches aus Brennstoff und Verbrennungsluft erforderliche Verdampfung kann dann bei sehr gleichmäßiger Temperaturverteilung und auf einem sehr hohen Temperaturniveau stattfinden.

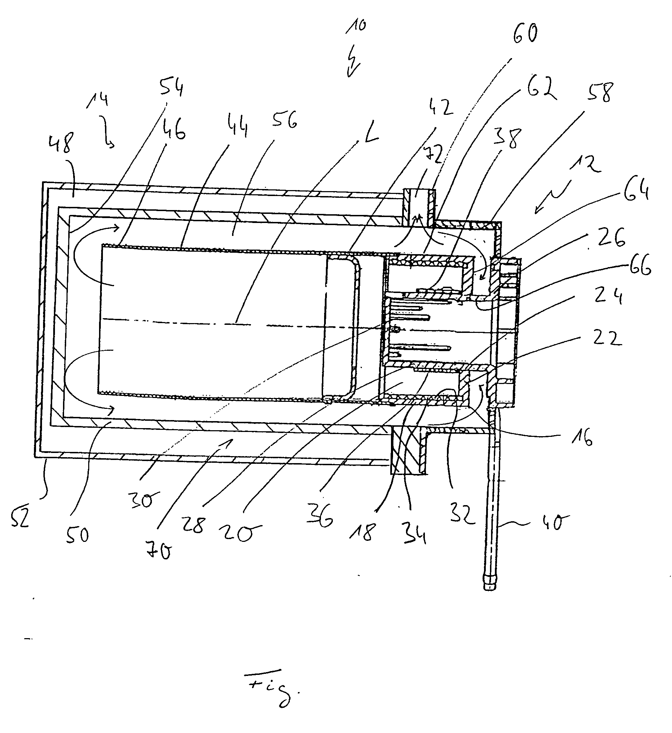

Die Erfindung wird nachfolgend mit Bezug auf die beiliegende Figur detailliert beschrieben, welche eine Längsschnittansicht eines erfindungsgemäßen Heizgeräts zeigt.

Das erfindungsgemäße Heizgerät ist in der Figur allgemein mit 10 bezeichnet. Es umfasst einen Brennerbereich 12 sowie einen Wärmetauscherbereich 14. Der Brennerbereich 12 wiederum weist ein allgemein mit 16 bezeichnetes Brennkammergehäuse auf, das eine im Wesentlichen topfartige Gestalt hat. Eine Außenwandung 18 des Brennkammergehäuses 16 begrenzt eine Brennkammer 20 bezogen auf eine Längsachse L des Heizgeräts 10 nach radial außen und bildet somit eine Brennkammeraußenwandung. Eine Bodenwandung 22 des Brennkammergehäuses 16 begrenzt die Brennkammer 20 an einer Seite in axialer Richtung und bildet somit eine Brennkammerbodenwandung. In der Bodenwandung 22 ist eine Öffnung 24 vorgesehen, in welche ein Verbrennungsluftzuführelement 26 zumindest mit einem zylindrischen Abschnitt 28 desselben eingesetzt ist, in welchem zylindrischen Abschnitt 28 mehrere Verbrennungslufteintrittsöffnungen 30 ausgebildet sind und welches ferner eine die Brennkammer 20 nach innen begrenzende Brennkammerinnenwandung bildet. Die Brennkammer 20 weist somit eine im Wesentlichen ringartige und einseitig offene Gestalt auf. An der Innenseite 32 der Außenwandung 18 ist ein poröses Verdampfermedium 34 vorgesehen, welches vorzugsweise die gesamte Innenseite 32 bedeckt. In entsprechender Weise kann an einer Außenseite 36 der Innenwandung bzw. des zylindrischen Abschnitts 28 eine Auskleidung 38 vorgesehen sein, die zumindest einen Teil dieser Außenseite 36 bedeckt. Das poröse Verdampfermedium 34 kann beispielsweise geflechtartig oder schaumartig ausgebildet sein. Über eine Brennstoffzuführleitung 40 wird in dieses poröse Medium 34 Brennstoff zur nachfolgenden Verdampfung und Abgabe in die Brennkammer 20 eingeleitet.

Axial anschließend an das Brennkammergehäuse 16 bzw. die Außenwandung 18 desselben ist ein auch eine Flammblende 42 tragendes Flammrohr 44 angeordnet. Dieses ist in seinem von dem Brennkammergehäuse 16 entfernten Endbereich 46 offen.

Die Wärmetauscheranordnung 14 umfasst zwei ineinander eingesetzte und zwischen sich einen Fluidströmungsraum 48 begrenzende, im Wesentlichen topfartige Gehäuseteile 50, 52. Ein Bodenbereich 54 des im Allgemeinen als Wärmetauscher bezeichneten Gehäuseteils 50 liegt der Öffnung des Flammrohrs 44 gegenüber. Die aus der Brennkammer 20 in das Flammrohr 44 eintretenden Flammen bzw. Verbrennungsabgase werden bei Auftreffen auf den Bodenbereich 54 des Gehäuseteils 50 umgelenkt und strömen dann entlang eines zwischen dem Gehäuseteil 50 und der Außenseite des Flammrohrs 44 gebildeten ringartigen Strömungsraums 56 wieder zurück in Richtung Brennerbereich 12.

Mit der Wärmetauscheranordnung 14 ist ein äußerer Gehäusebereich 58 der Brenneranordnung 12 verbunden. Dieser äußere Gehäusebereich 58 ist ebenfalls im Wesentlichen topfartig ausgebildet und ist im Bereich eines Flansches 60 an die Wärmetauscheranordnung 14 angebunden. Das Verbrennungsluftzuführelement 26 kann zumindest einen Teil des Bodenbereichs des Gehäusebereichs 58 bilden, wobei an diesem Bodenbereich dann auch ein Luftzuführgebläse getragen sein kann. Der gesamte Volumenbereich, in welchen die nach dem Verlassen des Flammrohrs 44 strömenden heißen Verbrennungsabgase geführt werden, umfasst zum einen den bereits angesprochenen ringförmigen Raum 56 zwischen dem Flammrohr 44 und dem Gehäuseteil 50. Des Weiteren ist dieser Volumenbereich begrenzt durch die Außenseite 62 der Außenwandung 18 des Brennkammergehäuses 16, die Außenseite 64 der Bodenwandung 22 des Brennkammergehäuses 16, den nicht durch die Öffnung 24 hindurchgeführten Abschnitt 66 des zylindrischen Abschnitts 28 des Verbrennungsluftzuführelements 26 sowie den bereits angesprochenen äußeren Gehäusebereich 58. All diese Komponenten bilden zusammen eine Strömungsführungsanordnung 70 für die Verbrennungsabgase, wobei die Verbrennungabgase den von dieser Strömungsführungsanordnung 70 umschlossenen Volumenbereich durch eine oder mehrere Austrittsöffnungen 72 beispielsweise im Bereich des Flansches 60 bzw. der Verbindung des äußeren Gehäusebereichs 58 mit der Wärmetauscheranordnung 14 verlassen können.

Durch die Strömungsführungsanordnung 70 werden die das Flammrohr 44 in seinem Endbereich 46 verlassenden heißen Verbrennungsabgase zum einen derart geführt, dass sie über eine sehr große Wechselwirkungsfläche zur Wärmeübertragung auf das die Wärmetauscheranordnung 14 durchströmende Fluid, im allgemeinen Wasser oder Luft, zur Verfügung stehen. Ferner wird diesen Verbrennungsabgasen das Umströmen der Brennkammer 20 an deren Außen- bzw. Bodenseite ermöglicht. Auf Grund dessen werden die Außenwandung 18 und die Bodenwandung 22 durch die vergleichsweise heißen Verbrennungsabgase sehr stark erwärmt. Da diese verschiedenen Bauteile bzw. Wandungen im Allgemeinen aus Metall ausgebaut sein werden, gelangt die auf diese übertragene Wärme sehr schnell und im Wesentlichen ohne große thermische Verluste auch zu der der Brennkammer 20 zugewandt liegenden Innenseite derselben, so dass das dort positionierte Verdampfermedium 38 und der darin ggf. vorgesehene bzw. in dieses eingeleitete Brennstoff gleichmäßig erwärmt werden können. Durch diese sehr gleichmäßige Erwärmung auf eine vergleichsweise hohe Temperatur wird eine ebenso gleichmäßige Brennstoffabdampfung in die Brennkammer 20 sichergestellt, mit der Folge, dass die Verbrennung unter einer deutlich reduzierten Schadstofferzeugung ablaufen kann.

Es ist selbstverständlich, dass an der vorangehend beschriebenen und in der Figur dargestellten Anordnung verschiedene Variationen vorgenommen werden können. So ist es beispielsweise möglich, ein poröses Verdampfermedium zusätzlich oder ausschließlich an der Innenseite des Brennkammerbodens vorzusehen. Der Ort der Einleitung des Brennstoffs kann des Weiteren angepasst an verschiedene konstruktive Gegebenheiten, wie z.B. die Positionierung eines in der Figur nicht dargestellten Zündorgans, ausgewählt werden. Des Weiteren ist es selbstverständlich möglich, die verschiedenen die Brennkammer begrenzenden Bauteile aus verschiedenen Materialien, wie z.B. Metall, Kunststoff o. dgl., anzufertigen. Selbstverständlich ist auch ein mehrschichtiger Aufbau der verschiedenen Wandungen möglich.

## Patentansprüche

1. Heizgerät, insbesondere für ein Fahrzeug, umfassend:
- eine Brennkammeranordnung (16) mit einer Brennkammerbodenwandung (22) und einer Brennkammeraußenwandung (18),
- eine Strömungsführungsanordnung (70) zum Führen von Verbrennungsabgasen aus der Brennkammeranordnung (16) heraus, von dieser weg und nach einer Strömungsrichtungsänderung in Richtung zur Brennkammeranordnung (16) zurück, wobei die Strömungsführungsanordnung (70) das Umströmen wenigstens eines Teils der Außenseite (62) der Brennkammeraußenwandung (18) und wenigstens eines Teils der Außenseite (64) der Brennkammerbodenwandung (22) durch in dieser geführte Verbrennungsabgase ermöglicht.

2. Heizgerät nach Anspruch 1,
**dadurch gekennzeichnet, dass** die Brennkammerbodenwandung (22) im Wesentlichen ringartig ausgebildet ist.

3. Heizgerät nach Anspruch 1 oder 2,
**dadurch gekennzeichnet, dass** die Strömungsführungsanordnung (70) in ihrem der Brennkammeranordnung (16) nahen Bereich die Außenseite (62) der Brennkammeraußenwandung (18), die Außenseite (64) der Brennkammerbodenwandung (22) sowie eine Brennkammer (20) nach innen begrenzendes Verbrennungsluftzuführelement (26) umfasst.

4. Heizgerät nach Anspruch 3,
**dadurch gekennzeichnet, dass** die Brennkammeranordnung (16) ein im Wesentlichen topfartiges Gehäuse (16) umfasst, dessen Außenwandung (18) im Wesentlichen die Brennkammeraußenwandung (18) bildet und dessen Bodenwandung (22) im Wesentlichen die Brennkammerbodenwandung (22) bildet, wobei die Bodenwandung (22) des Gehäuses (16) eine Öffnung (24) aufweist, durch welche das Verbrennungsluftzuführelement (26) teilweise hindurchgeführt ist, wobei das Verbrennungsluftzuführelement (26) mit einem außerhalb einer Brennkammer (20) liegenden Bereich (66) einen Teil der Strömungsführungsanordnung (70) bildet.

5. Heizgerät nach einem der Ansprüche 1 bis 5,
**gekennzeichnet durch** ein wenigstens teilweise an der Brennkammeraußenwandung (18) oder/und der Brennkammerbodenwandung (22) vorgesehenes Verdampfermedium (34) zur Abgabe von Brennstoff.
